# EUROPÄISCHE PATENTSCHRIFT

(11) **EP 0 827 769 B1**
(45) Veröffentlichungstag und Bekanntmachung des Hinweises auf die Patenterteilung: **29.11.2000**
(21) Anmeldenummer: 97202740.3
(22) Anmeldetag: 05.09.1997
(51) Int. Cl.: B01D 39/20

(54) **Filterelement**
Filter element
Elément filtrant

(30) Priorität: 10.09.1996 AT 52696
(43) Veröffentlichungstag der Anmeldung: 11.03.1998
(73) Patentinhaber: PLANSEE Aktiengesellschaft, 6600 Reutte, Tirol (AT)
(72) Erfinder: Dreer, Norbert, 6600 Höfen (AT); Grill, Robert, 6600 Reutte (AT); Kremshofer, Silvia, Dr., 6600 Reutte (AT)
(74) Vertreter: Lohnert, Wolfgang, Dr.

(56) Entgegenhaltungen:
- EP-A- 0 510 495
- EP-A- 0 639 398
- US-A- 3 896 028
- US-A- 3 965 010
- PATENT ABSTRACTS OF JAPAN vol. 014, no. 111 (P-1014), 28.Februar 1990 & JP 01 310398 A (MITSUBISHI HEAVY IND LTD), 14.Dezember 1989,

## Beschreibung

Die Erfindung bezieht sich auf ein Filterelement mit einem porösen Körper aus gepreßten und gesinterten korrosionsbeständigen Teilchen.

Derartige Filterelemente haben im allgemeinen eine gleichmäßige Porenstruktur und werden zum Herausfiltern von unerwünschten Teilchen aus einer Flüssigkeit oder aus einem Gas eingesetzt. Durch unterschiedliche Transportmechanismen - Siebeffekte, Trägheitskräfte, Diffusion, elektrostatische Kräfte - gelangen die im zu filternden Medium dispergierten, unerwünschten Partikel an die einzelnen Körner des Filterelementes, während der Rest des Mediums durch das Filterelement hindurchtritt. Wenn die Poren des Filterelementes durch das Filtrat verstopfen ist es nicht mehr funktionsfähig und muß gereinigt werden. Diese Reinigung erfolgt in der Regel im Mediengegenstrom durch Rückschlagimpulse.

Die Filterelemente müssen vielfach bei hohen Temperaturen und für aggressive Medien eingesetzt werden. Bei der Heißgasentstaubung von Prozeß- und Abgasen können beispielsweise Temperaturen bis 1000° C auftreten. Die Filterelemente müssen daher hochtemperaturbeständig und korrosionsfest sein. Gleichzeitig müssen sie trotz der für die Filterwirkung notwendigen Porosität eine ausreichende mechanische Festigkeit aufweisen, um gut handhabbar zu sein und vor allem, um den mechanischen Beanspruchungen ohne Beschädigung zu genügen, die durch die stoßartigen Rückschlagimpulse zum Reinigen der Filter auftreten.

Für die Hochleistungs-Heißgasentstaubung kommen derzeit selbsttragende Filterelemente meist als einseitig geschlossene Hohlzylinder, als sogenannte Filterkerzen aus Keramikmaterial zum Einsatz. Sie weisen eine hervorragende Korrosionsfestigkeit sowie Temperaturbeständigkeit auf, sind jedoch hinsichtlich stoßartiger mechanischer Belastung wenig tauglich, so daß es durch die notwendigen Reinigungen der Filter durch Rückschlagimpulse vielfach zu einem frühzeitigen Ausfall derartiger Filterelemente kommt.

Bekannte metallische Filterelemente weisen zwar die erforderliche mechanische Festigkeit in ausreichendem Maße auf, sind aber insbesondere bei besonders aggressiven Medien und hohen Temperaturen nicht mehr zufriedenstellend einsetzbar.

Die DE-B2 24 56 626 beschreibt beispielsweise ein Filterelement aus einer Legierung mit 30 - 40 Gew.% Chrom, 2 - 4 Gew.% Silizium sowie neben geringen Anteilen an Kohlenstoff und Stickstoff mit Eisen als Rest. Dieses Filterelement wird in erster Linie für Polymerisationsschmelzen bei Temperaturen von etwa 300° C eingesetzt und ist für aggressivere Medien und höhere Temperaturen nur in begrenztem Maß geeignet.

Chrom ist als Metall mit einer hervorragenden Korrosionsfestigkeit auch bei hohen Temperaturen bekannt. Weiters ist aber auch bekannt, daß reines Chrom oder hochchromhaltige Legierungen normalerweise sehr spröde sind und deshalb die mechanischen Anforderungen, die an Filterelemente gestellt werden, nicht erfüllen.

Deshalb ist auch die Legierung entsprechend der DE-B2 24 56 626 auf einen maximalen Chromgehalt von 40 Gew.% beschränkt und es sind auch keine anderen Filterelemente mit einem höheren Chromgehalt in der Praxis bekannt geworden.

Der Erfindung liegt die Aufgabe zugrunde, ein Filterelement zu schaffen, das bei höchster Korrosionsbeständigkeit auch noch bei Temperaturen von 1000° problemlos eingesetzt werden kann und das gleichzeitig ausreichende mechanische Festigkeit aufweist, um die bei der Filterreinigung auftretenden hohen Stoßbeanspruchungen über lange Zeiträume ohne Schaden zu überstehen.

Erfindungsgemäß wird dies dadurch erreicht, daß das Filterelement aus einem Pulver aus reinem Chrom oder einer Chromlegierung mit mindestens 70 Gew.% Chromanteil und einer Teilchengröße der Chrompartikel zwischen 160 µm und 500 µm hergestellt ist.

Es hat sich herausgestellt, daß bei Verwendung von Chrompulver einer ganz bestimmten Kornfraktion im Bereich zwischen 160 und 500 µm, unabhängig von den bei der Herstellung angewandten üblichen Preßdrücken und Sinterbedingungen, Filterelemente geeigneter Porosität in der Größenordnung zwischen 20 und 30 % mit ausreichenden Werten hinsichtlich der mechanischen Eigenschaften hergestellt werden können. Daß gerade bei Verwendung einer derartig groben Kornfraktion beim spröden Chrom so gute mechanische Eigenschaften zu erreichen sind, war in keiner Weise zu erwarten, da aus der Pulvermetallurgie der hochschmelzenden Metalle, zu denen auch Chrom zu zählen ist, bekannt ist, daß normalerweise Sinterkörper aus feinen Pulvern mit Kornfraktionen unterhalb von etwa 40 µm die besten mechanischen Eigenschaften aufweisen. Derart feine Kornfraktionen würden sich für den Fachmann für die Herstellung von porösen Filterelementen aufgrund des bei der Filterung auftretenden hohen Druckverlustes von vorne herein ausschließen.

Als besonders bevorzugter Korngrößenbereich der Chromausgangspulver haben sich Teilchengrößen zwischen 200 und 300 µm bewährt.

Wird für das Filterelement nicht reines Chrom, sondern eine Chromlegierung verwendet, so haben sich insbesondere solche Chromlegierungen bewährt, die ein oder mehrere Metalle aus der Gruppe Fe, Co, Ni und Cu und/oder ein oder mehrere Oxide der Metalle aus der Gruppe Cr, Zr, Hf, Y und der Seltenen Erden enthalten.

Eine besonders bevorzugte Variante eines Filterelementes wird dadurch erreicht, daß das Filterelement auf der dem ungefilterten Medium zugewandten Oberfläche eine Beschichtung aufweist, die aus einem Pulver aus Chrom oder einer Chromlegierung mit einer Korngröße von weniger als 40 µm hergestellt ist.

Auf diese Art und Weise wird eine besondere Oberflächen-Filterwirkung erzielt. Das Filterelement bleibt für eine besonders lange Funktionsspanne funktionstüchtig, da die unter der dünnen feinporigen Oberflächenschicht gelegenen groben Poren nicht mehr verstopfen. Durch diese Oberflächenfilterwirkung, kann es durch einen Rückstoßimpuls leichter und vollständiger gereinigt werden als Filterelemente ohne diese Oberflächenschicht. Durch die Abstützung der Oberflächenschicht durch den Grundkörper, der aus Pulvern mit einer Teilchengröße zwischen 160 und 500 µm hergestellt ist, ist trotzdem die ausreichende mechanische Festigkeit des Filters gewährleistet.

Besonders bewährt hat es sich, wenn die Beschichtung eine Schichtstärke zwischen 100 µm und 200 µm aufweist und durch eine Schlicker-Beschichtung aufgebracht ist.

Die erfindungsgemäßen Filterelemente werden beispielsweise zur Gasreinigung bei der Energiegewinnung durch Biomasse- oder Kohlevergasung, wo sie reduzierenden Atmosphären zwischen 600 und 800°C ausgesetzt sind, oder bei Crackingsprozessen in der Erdölindustrie zur Katalysatorrückgewinnung ebenfalls unter reduzierenden Atmosphären zwischen 600 und 800°C, oder bei der Herstellung von Melamin zur Katalysatorrückgewinnung in stark nitrierender Atmosphäre bei Temperaturen um 400°C vorteilhaft eingesetzt.

Im folgenden wird die Erfindung anhand von Ausführungsbeispielen näher erläutert.

### BEISPIEL 1:

Für die Herstellung erfindungsgemäßer rondenförmiger Filterelemente mit 150 mm ⌀ und 6 mm Dicke für Querstromfilter wurde Chrompulver mit einer Teilchengrößenverteilung zwischen 200 µm und 300 µm einachsig mit einem Preßdruck von 2,2 t/cm² in der Matrize verpreßt. Die Preßlinge wurden 2 h bei 1400°C unter Wasserstoff gesintert. Die Sinterkörper wurden anschließend durch mechanische Bearbeitung auf das gewünschte Endmaß gebracht. Die derart hergestellten Filterelemente wiesen eine Porosität von 30 % und eine Porengrößenverteilung von 20 - 200 µm auf. Ein Teil dieser Filterelemente wurde anschließend durch Bestreichen mit einer wässrigen Suspension von Chrompulver mit einer Teilchengrößenverteilung 1 bis 10 µm an der Oberfläche bestrichen und einer weiteren Sinterbehandlung über 2 h bei 1400°C unter Wasserstoff unterzogen. Die derart aufgebrachte Oberflächenschicht wies eine Dicke von 100 µm, eine Porosität von 20 % und eine Porengrößenverteilung von 10 bis 50 µm auf.

### BEISPIEL 2:

Zur Herstellung von erfindungsgemäßen selbsttragenden Filterkerzen in Form von einseitig geschlossenen Rohren mit einem Außendurchmesser von 57 mm, einem Innendurchmesser von 47 mm und einer Länge von 1000 mm wurde reines Chrompulver mit einer Teilchengrößenverteilung zwischen 160 und 500 µm mit einem Preßdruck von 2100 bar kaltisostatisch unter Berücksichtung des bei der Sinterung auftretenden Schwundes zu den gewünschten Rohren gepreßt.
Anschließend wurden die Preßlinge über 2 h bei 1450°C unter Wasserstoff gesintert. Eine mechanische Endbearbeitung konnte bei diesen Filterelementen entfallen. Die derart hergestellten Filterelemente wiesen eine Porosität von 31 % und eine Porengrößenverteilung von 20 bis 200 µm auf.

### BEISPIEL 3:

Für Vergleichszwecke wurden Filterelemente wie nach Beispiel 1, jedoch mit einer Teilchengrößenverteilung von 10 bis 125 µm und ohne Oberflächenbeschichtung hergestellt. Die derart hergestellten Filterelemente wiesen eine Porosität von 25 % und eine Porengrößenverteilung von 30 bis 80 µm auf.

### BEISPIEL 4:

Ebenfalls für Vergleichszwecke wurden Filterelemente wie nach Beispiel 1, jedoch mit einer Teilchengrößenverteilung von 550 bis 1000 µm und ohne Oberflächenbeschichtung hergestellt. Die so hergestellten Filterelemente wiesen eine Porosität von 23 % und eine Porengrößenverteilung von 50 bis 300 µm auf.

Die nach den Beispielen 1 bis 4 hergestellten Filterelemente wurden einem Druckversuch unterzogen. Dazu wurden von den rohrförmigen Filterkerzen Probekörper in Form eines O-Ringes (kurzer Rohrabschnitt) abgetrennt und derartige Probekörper auch aus den rondenförmigen Filterelementen herausgearbeitet. Daraufhin wurden die Probekörper auf einer Universalprüfmaschine zwischen zwei Druckplatten bis zum Bruch belastet.

Der Druckversuch hat ergeben, daß die nach den Beispielen 1 und 2 hergestellten erfindungsgemäßen Filterelemente eine durchschnittliche Bruchfestigkeit zwischen 35 und 40 N/mm² aufwiesen, während die nach dem Vergleichsbeispiel 3 hergestellten Filterelemente eine durchschnittliche Bruchfestigkeit zwischen 8 und 10 N/mm² und die nach dem Vergleichsbeispiel 4 hergestellten Filterelemente eine durchschnittliche Bruchfestigkeit zwischen 12 und 15 N/mm² aufwiesen.

Es ist klar zu erkennen, daß durch den erfindungsgemäßen Bereich der Teilchengrößenverteilung eine völlig unerwartete, deutliche Verbesserung der mechanischen Festigkeit erreicht wurde.

Die erfindungsgemäß hergestellten Filterelemente wurden zur Heißgasfiltration bei der Melaminharzgewinnung unter stark nitrierenden Bedingungen bei Temperaturen um 400°C eingesetzt. Nach 2-monatigem Betrieb mit 10-minütigen Reinigunszyklen im Gegen Gegenluftstrom konnten keinerlei korrosive und mechanische Beschädigungen der Filterelemente festgestellt werden.

## Patentansprüche

1. Filterelement mit einem porösen Körper aus gepreßten und gesinterten korrosionsbeständigen Teilchen, **dadurch gekennzeichnet,** daß es aus einem Pulver aus Chrom oder einer Chromlegierung mit mindestens 70 Gew.% Cr und einer Teilchengröße der Chrompartikel zwischen 160 µm und 500 µm hergestellt ist.

2. Filterelement nach Anspruch 1, dadurch gekennzeichnet, daß das Pulver eine Teilchengröße zwischen 200 µm und 300 µm aufweist.

3. Filterelement nach Anspruch 1 oder 2, dadurch gekennzeichnet, daß die Chromlegierung eines oder mehrere Metalle aus der Gruppe Fe, Co, Ni und Cu und/oder eines oder mehrere Oxide der Metalle aus der Gruppe Cr, Zr, Hf, Y und der Seltenen Erden enthält.

4. Filterelement nach einem der Ansprüche 1 bis 3, dadurch gekennzeichnet, daß es an der dem zu filternden Medium zugewandten Oberfläche eine Beschichtung aufweist, die aus einem Pulver aus Chrom oder einer Chromlegierung mit einer Korngröße von weniger als 40 µm hergestellt ist.

5. Filterelement nach Anspruch 4, dadurch gekennzeichnet, daß die Beschichtung eine Schichtstärke zwischen 100 µm und 200 µm aufweist und durch Schlicker-Beschichtung aufgebracht ist.

## Claims

1. Filter element having a porous body made of pressed and sintered corrosion-resistant particles, characterized in that it is made from a powder composed of chromium or a chromium alloy containing at least 70% by weight of Cr and having a particle size of the chromium particles of between 160 µm and 500 µm.

2. Filter element according to Claim 1, characterized in that the powder has a particle size of between 200 µm and 300 µm.

3. Filter element according to Claim 1 or 2,
characterized in that the chromium alloy contains one or more metals from the group comprising Fe, Co, Ni and Cu and/or one or more oxides of the metals from the group comprising Cr, Zr, Hf, Y and the rare earths.

4. Filter element according to one of Claims 1 to 3, characterized in that it has, on the surface facing the medium to be filtered, a coating which is made from a powder composed of chromium or a chromium alloy having a particle size of less than 40 µm.

5. Filter element according to Claim 4, characterized in that the coating has a layer thickness of between 100 µm and 200 µm and is applied by slip coating.

## Revendications

1. Elément filtrant qui inclut un corps poreux composé de particules comprimées et frittées résistantes à la corrosion, caractérisé en ce qu'il est fabriqué à partir d'une poudre de chrome ou d'un alliage de chrome dont la teneur en Cr est d'au moins 70% en poids et dans lequel la granulométrie des particules de chrome est comprise entre 160 µm et 500 µm.

2. Elément filtrant selon la revendication 1, caractérisé en ce que la granulométrie de la poudre est comprise entre 200 µm et 300 µm.

3. Elément filtrant selon la revendication 1 ou 2, caractérisé en ce que l'alliage de chrome contient un ou plusieurs métaux du groupe constitué par Fe, Co, Ni et Cu et/ou un ou plusieurs oxydes des métaux du groupe constitué par Cr, Zr, Hf, Y et les terres rares.

4. Elément filtrant selon l'une quelconque des revendications 1 à 3, caractérisé en ce qu'il comporte, sur la surface tournée vers le milieu à filtrer, une couche qui est fabriquée à partir d'une poudre de chrome ou d'un alliage de chrome d'une granulométrie inférieure à 40 µm.

5. Elément filtrant selon la revendication 4, caractérisé en ce que l'épaisseur de couche du revêtement est comprise entre 100 µm et 200 µm et que le revêtement est appliqué par enduction de barbotine.
